# EUROPÄISCHE PATENTANMELDUNG

(11) **EP 1 365 493 A1**
(43) Veröffentlichungstag der Anmeldung: **26.11.2003**
(21) Anmeldenummer: 03011722.0
(22) Anmeldetag: 23.05.2003
(51) Int. Cl.: H02G 3/12

(54) **Installationsdose**

(30) Priorität: 24.05.2002 DE 10223229
(71) Anmelder: TRIBECRAFT AG, 8038 Zürich (CH)
(72) Erfinder: Werner, Uwe, 8904 Aesch (CH); Evertz, Jörg, 8041 Leimbach (CH)
(74) Vertreter: Hertz, Oliver, Dr.

(57) **Zusammenfassung**

Eine in eine Wand, vorzugsweise Hohlwand, einsetzbare Installationsdose zur Aufnahme von Schaltern, Steckdosen, etc. ist aus nachgiebigem Material ausgebildet, wobei zumindest der Boden (4) gummielastische Eigenschaften hat, so dass die Dose beim Einsetzen in ein vorbereitetes Loch zusammengedrückt werden kann, damit in der Wand verlegte Installationsrohre oder Leitungen das Einsetzen der Dose nicht behindern. Zur vorläufigen Fixierung der Dose in der vorderen Wandplatte dienen ein nach außen ragender dünner Bund (6) zur Anlage an der Außenfläche der Wandplatte und von der Wand (2) der Dose wegragende Rastschultern (8) zur Anlage an der Innenfläche der Wandplatte. Ein Faltenbalg (10) zwischen Bund und Rastschultern erlaubt eine Anpassung an unterschiedliche Wanddicken.

## Beschreibung

Die Erfindung betrifft eine Installationsdose mit den im Oberbegriff des Anspruchs 1 angegebenen Merkmalen.

Derartige Installationsdosen werden in vorbereitete Löcher einer Wand eingesetzt, um Schalter, Steckdosen, Telefonanschlussdosen etc. aufzunehmen, welche an in der Wand liegende Leitungen angeschlossen werden, die in die Installationsdose hineingeführt werden. Dieses Hereinführen der Leitungen durch die Wandung der Dose ist insbesondere dann mühselig, wenn man das Loch in der Wand nicht viel größer als den Durchmesser der Installationsdose macht. Außerdem sitzen die in der Dosenwand vorgesehenen oder vorgeprägten Öffnungen zum Hereinführen der Leitung häufig nicht genau dort, wo die Leitung oder ein eingeputztes Rohr sich befindet, so dass der Handwerker Anpassungsarbeiten mit Feile, Messer oder Bohrer vornehmen muss, was zeitraubend und mit der Gefahr von Verletzungen verbunden ist.

Bei Hohlwänden besteht ein Problem darin, dass die verwendeten Gipskartonplatten mit üblicherweise 12 mm Stärke relativ dünn sind und ein Einputzen der Dose nicht gestatten. Zum Fixieren der in den Hohlraum hineinragenden Installationsdosen verwendet ein bekanntes System seitliche Verhakungsstreifen, die mit nach außen ragenden Hakenteilen zunächst bis hinter die Dose reichen und dort zur Mitte zusammengedrückt werden können, wenn man die Dose in das Loch einsetzt. Die Dose wird dann in der gewünschten Orientierung ausgerichtet und soweit in die Öffnung hineingedrückt, bis sie vorn bündig abschließt. Dabei drücken sich kleine Vorsprünge in das weiche Gipskartonmaterial und fixieren damit die Dose gegen Verdrehen. Nun werden die erwähnten Streifen herausgezogen, wobei sich ihre Haken von innen gegen die Gipskartonwand anlegen und ein zwischen Streifen und Dose vorgesehener Rastmechanismus die Streifen in dieser Lage fixiert. Die über die Wand hinausstehenden Streifenteile werden abgeschnitten. Abgesehen davon, dass eine nachträgliche Korrektur der Position der einmal eingesetzten Dose nicht mehr möglich ist, ist nicht nur die Konstruktion dieser bekannten Dose, sondern auch ihre Montage relativ aufwendig. Dies gilt insbesondere für das Einsetzen der Dose in die Wandöffnung, wobei die Dose wegen der seitlich in sie hineingeführten Leitung gekippt werden muss und dabei nur schlecht in die Öffnung passt. Macht man diese größer, dann sitzt die Dose anschließend nicht richtig fest in der Wand. Ungünstig ist auch, dass Leitungsrohre bzw. -schläuche kaum an der Dose vormontiert und mit dieser eingesetzt werden können.

Der Erfindung liegt die Aufgabe zugrunde, eine Installationsdose zu schaffen, die sich mit geringerem Arbeitsaufwand auch bei in sie hingeführten Leitungen oder vormontierten Rohren ohne Schwierigkeiten in genau passende Wandlöcher bündig einsetzen lässt und vor dem endgültigen Fixieren auch noch in ihrer Position leicht korrigiert werden kann.

Diese Aufgabe wird durch die im Anspruch 1 angegebenen Merkmale gelöst. Weiterbildungen der Erfindung sind in den Unteransprüchen gekennzeichnet.

Die erfindungsgemäße Ausbildung der Installationsdose mit einem Boden aus gummielastischem Material ermöglicht es, die Dose beim Einsetzen in das Loch der Wand etwas zusammenzudrücken, so dass sie auch verkantet in das Loch hineingeführt werden kann, wie es der Fall ist, wenn die in der Wand verlegte Leitung bereits durch die Seitenwand der Dose in diese hineingeführt worden ist oder wenn ein eingeputztes Leitungsrohr oder Wellrohr in die Dose münden soll.

Zweckmäßigerweise kann man die Dose auch insgesamt aus gummielastischem Material herstellen, beispielsweise aus einem geeigneten Kunststoff spritzen oder im Schlauchblasverfahren herstellen. Als Materialien kommen u.a. thermoplastische Elastomere in Frage, welche auch gleichzeitig Feuerschutzbestimmungen für Elektroanlagen genügen.

Um eine exakte Montage der erfindungsgemäßen Dose in der Wand zu gewährleisten, ist an ihrem offenen Ende zweckmäßigerweise ein nach außen ragender dünner Bund vorgesehen, bis zu dem die Dose in das Loch in der Wand hingeschoben wird und der dann auf der Wand aufliegt. Dieser Bund kann aus einem härteren Material bestehen und z.B. bei der Herstellung der Dose mit deren weicherem Material zusammengespritzt werden. Auch durch unterschiedliche Abkühlgeschwindigkeiten des gespritzten Materials lassen sich ggf. unterschiedliche Härten einzelner Teile erreichen.

Eine spezielle Ausgestaltung der Erfindung besteht darin, an gegenüberliegenden Seiten der Dosenwand nach außen ragende Rastschultern vorzusehen, die sich bei in eine Hohlwand eingesetzte Dose von hinten an die Vorderwand anlegen und die Dose zusammen mit dem umlaufenden Bund axial fixieren. Beispielsweise können 2 oder 4 solcher Schultern aus der Wand ausgeformt werden. Toleranzen der Wanddicke, üblicherweise 12 mm starke Gipskartonplatten, werden durch die Elastizität des Dosenmaterials ausgeglichen. Zur Anpassung an größere Wandstärken kann der Bereich zwischen Bund und Rastschultern zusätzlich nach Art eines Faltenbalges ausgebildet werden, der eine Verlängerung der Dosenwand in Axialrichtung beispielsweise auf 20 bis 25 mm erlaubt. Nach dem Einsetzen lässt sich die Dose noch problemlos ausrichten. Eine endgültige Fixierung kann durch eine Verschraubung erreicht werden, bei welcher durch den Bund oder vom Bund wegragende Ohren gesteckte und die Wandplatte durchsetzende Schrauben in die Rastschultern eingeschraubt werden und diese gegen die Wandplatte ziehen.

Um mehrere Dosen zu kombinieren, ist es zweckmäßig, die Dosen an gegenüberliegenden Seiten abgeflacht auszubilden und den Bund an diesen Stellen mit Sollbruchstellen zu versehen, so dass die Dosen aneinander gesetzt werden können und dann den richtigen Abstand entsprechend den Öffnungen einer gemeinsamen Abdeckung voneinander haben. Sieht man an den abgeflachten Bereichen komplementäre Profile vor, dann lässt sich die gegenseitige Position der einzelnen Dosen in der Kombination exakter festlegen, und man kann sie als Einheit vormontieren.

Zur Einführung der Kabel in die Dose können in deren Wand Durchtrittsöffnungen vorzugsweise für verschiedene Durchmesser vorgeprägt sein, die nach Bedarf durchgedrückt werden. Diese Vorprägungen können wie üblich als kreisförmige oder auch als sternförmig verlaufende Materialschwächungen ausgeführt werden, wobei im letzteren Fall der Kreuzungspunkt durchgedrückt wird und das Loch nicht größer als der Kabeldurchmesser wird. Als weitere Möglichkeit kann man auch Würgenippel als Kabeleinführung in der Dosenwand ausbilden.

Wenn auch ein Haupteinsatzgebiet der erfindungsgemäßen Dose bei Hohlwänden liegt, bei denen Installationsdosen nicht eingegipst werden, lässt sie sich auch bei Massivwänden benutzen und in in diese gebohrte Löcher einsetzen und erforderlichenfalls auch eingipsen, was bei Einsätzen mit Spreizkrallenfixierung eventuell unnötig ist, weil durch die Krallen gleichzeitig die elastische Dose im Installationsloch fixiert wird.

Zu den Vorteilen der erfindungsgemäßen Dose zählen einfache Montage von Hand, kurze Montagezeit, geringer Montagewerkzeugeinsatz, Vormontage ohne Verspannung, problemloses Einführen von Rohren oder Kabeln in die Dosenwand, einfaches Ausrichten bzw. Nachrichten, einfache und sichere Befestigung in der Wand, und leichteres Verstauen von Kabeln und Kabelverbindern innerhalb der Dose, weil diese infolge ihrer Elastizität nachgeben kann.

Die Materialstärke für die erfindungsgemäße Dose kann beispielsweise im Bereich von 2 mm liegen und hängt im Einzelfall vom verwendeten Material ab. Der Boden soll relativ weich sein, die Wand kann dagegen etwas härter sein oder gewünschtenfalls auch mit Längsrippen verstärkt werden. Der dünne Bund soll etwa 0,5 mm dick sein und vorzugsweise relativ hart sein. Man kann jedoch im Sinne einfacher Fertigung auch alle Teile aus demselben Material mit gleicher Härte ausbilden. Um den Boden besser kollabierbar zu machen, kann man ihn mit einer querverlaufenden Sicke versehen, längs der er leichter geknickt werden kann, wenn er in das aus der Wand herausgearbeitete Loch eingesetzt wird. Bei gegossenen Wänden, in welche Rohre gleich mit eingegossen werden, lässt sich die Dose an der Schalung befestigen und hat gegenüber vielen bekannten Dosen den Vorteil, dass sie keine offen bleibenden Durchbrüche aufweist, durch welche Beton ins Doseninnere gelangen könnte und später die Installation stören würde.

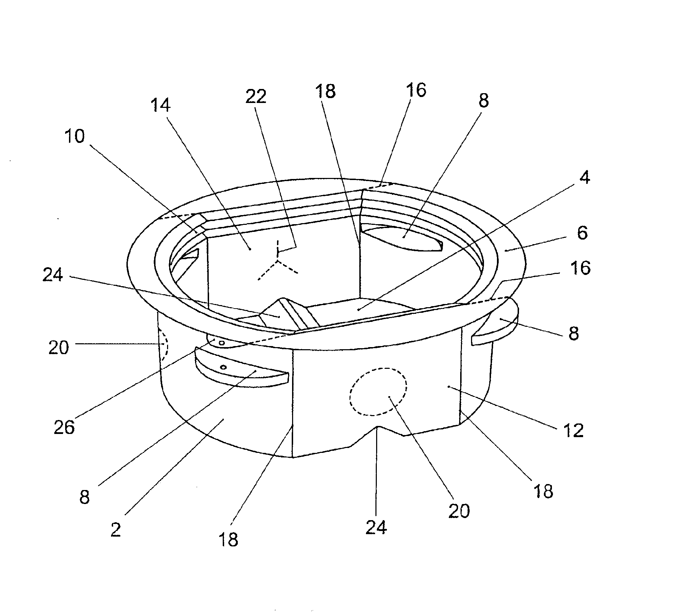

Die Erfindung sei nun anhand eines in der beiliegenden Zeichnung in perspektivischer Form veranschaulichten Ausführungsbeispiels näher erläutert.

Die Dose besteht aus einer zylindrischen Wand 2, die an einer Seite durch einen Boden 4 abgeschlossen ist und an ihrer gegenüberliegenden Seite einen nach außen ragenden dünnen Bund 6 aufweist. Von der Wand 2 ragen im Abstand vom Bund 6 vier Rastschultern 8 nach außen, die wie gezeichnet innen hohl sein können. Wird die Dose in einer Öffnung einer Wandplatte montiert, dann liegt der Bund 6 außen auf der Wandplatte auf und die Rastschultern 8 liegen an der Innenseite der Wandplatte an. Damit die Dose in Wandplatten unterschiedlicher Stärke montiert werden kann, ist die Wandung im Bereich zwischen dem Bund 6 und den Rastschultern 8 als Faltenbalg 10 ausgebildet, der eine Anpassung des Abstandes zwischen Bund 6 und Schultern 8 an die jeweilige Wandplattenstärke erlaubt.

Im dargestellten Ausführungsbeispiel ist die im übrigen zylindrische Wand 2 an zwei gegenüberliegenden Stellen abgeflacht, wobei die in der Figur vordere Abflachung mit 12 und die hintere mit 14 bezeichnet ist. An diesen Stellen ist der aus relativ hartem Material bestehende Bund 6 mit Sollbruchlinien 16 ausgebildet. Will man mehrere Dosen zu einer Einheit kombinieren, dann werden die Bundsegmente bei den Abflachungen an den Sollbruchlinien 16 abgebrochen, und zwei Dosen können unmittelbar mit ihren Abflachungen zusammengefügt werden, so dass ihr Mittenabstand dem üblichen Lochabstand einer gemeinsamen Abdeckung enspricht. Will man die Dosen zu einer Einheit vormontieren, so können an den Kanten 18 - hier allerdings nicht dargestellte-komplementäre Profile vorgesehen sein, mit denen zwei benachbarte Dosen miteinander verrastet werden können. An den abgeflachten Stellen 12 und 14 sind vorbereitete Durchtrittsöffnungen 20 und 22 vorgesehen, durch welche die Dosen zur Durchführung von Leitungen miteinander in Verbindung stehen. Die Durchtrittsöffnung 20 ist beispielsweise als vorgeprägte Kreisöffnung gezeigt, deren Innenteil leicht entfernt werden kann. Das Beispiel der Durchtrittsöffnung 22 hat dagegen die Form sternförmiger Schwächungslinien, die leicht einreißen, wenn ein Kabel oder ein Leitungsrohr gegen diese Stelle gedrückt wird.

Die Anzahl von drei Strahlen ist nur als Beispiel anzusehen, es können auch mehr sein. Wenn in der Zeichnung auch nur zwei Durchtrittsöffnungen 20 und 22 an den Abflachungen 12 und 14 gezeichnet sind, können selbstverständlich auch im übrigen zylindrischen Teil der Wand 2 Durchtrittsöffnungen vorgesehen sein.

Zumindest der Boden 4 besteht aus gummielastischem Material, so dass er sich leicht zusammendrücken lässt. Um dies zu unterstützen, ist im dargestellten Ausführungsbeispiel eine quer über den Boden verlaufende Sicke 24 vorgesehen. Vorzugsweise besteht auch die Wand 2 aus solchem Material, was die Herstellung erleichtert. Andererseits braucht die Wand 2 nicht so elastisch wie der Boden zu sein, sondern es genügt, wenn sie soweit nachgiebig ist, dass die Dose beim Einsetzen in das in der Wand vorbereitete Loch so stark zusammengedrückt werden kann, dass sie sich einfach verkantet einsetzen lässt, wie es für die Montage erwünscht ist, wenn Rohre oder Leitungen in die Dose einzuführen sind. Dagegen besteht der beispielsweise nur 0,5 mm dünne Bund 6 vorzugsweise aus relativ hartem Material, um der Dose am Rand die gewünschte Formsteifigkeit zu geben. Fertigungstechnisch einfacher ist es allerdings, die gesamte Dose aus einheitlichem Material herzustellen. Vom Bund 6 ragen im dargestellten Ausführungsbeispiel Ohren 26 mit Bohrung nach außen, die mit entsprechenden Bohrungen in den Rastschultern 8 fluchten und von denen der Einfachheit halber nur eine eingezeichnet ist. Wenn die Dose in einer Wandplatte montiert ist, liegt der Bund 6 mit den Ohren 26 außen auf der Wand auf und die Rastschultern 8 liegen innen an der Wand an. In diesem Zustand kann die Dose noch leicht verdreht werden, um eine gewünschte Ausrichtung zu erhalten. Dann werden Schrauben durch die Ohren 26 und die Wandplatte in die Rastschultern 8 eingeschraubt, was in der Zeichnung durch kleine Löcher in Ohr- und Rastschulter angedeutet ist, so dass diese beiden Teile gegen die Wandplatte verspannt werden und die Dose unverrückbar fest in der Wand sitzt.

## Patentansprüche

1. Installationsdose mit einer etwa zylindrischen Wand aus nachgiebigem Material, durch welche Leitungen ins Innere der Dose hineinführbar sind und welche an einem Ende durch einen Boden abgeschlossen ist,
**dadurch gekennzeichnet, dass** zumindest der Boden (4) aus gummielastischem Material besteht.

2. Installationsdose nach Anspruch 1, **dadurch gekennzeichnet, dass** die Dose insgesamt aus gummielastischem Material gebildet ist.

3. Installationsdose nach Anspruch 1, **dadurch gekennzeichnet, dass** der Boden (4) mit einer vorgeprägten Sicke (24) ausgebildet ist.

4. Installationsdose nach Anspruch 1 oder 2, **dadurch gekennzeichnet, dass** von der Wand (2) der Dose mindestens zwei Rastschultern (8) nach außen ragen.

5. Installationsdose nach Anspruch 4, **dadurch gekennzeichnet, dass** die Rastschultern (8) als hohle Teile aus der Wand (2) ausgeformt sind.

6. Installationsdose nach einem der vorstehenden Ansprüche, **dadurch gekennzeichnet, dass** die Wand (2) an ihrem anderen Ende einen nach außen ragenden dünnen Bund (6) aus relativ hartem Material aufweist.

7. Installationsdose nach einem der vorstehenden Ansprüche, **dadurch gekennzeichnet, dass** die Zylinderform der Wand (2) an gegenüberliegenden Seiten der Dose abgeflacht ist (Abflachungen 12, 14).

8. Installationsdose nach Anspruch 7, **dadurch gekennzeichnet, dass** an den abgeflachten Bereichen (Abflachungen 14, 16) komplementäre Profile zum Zusammenfügen von Dosen zu einem Verbund vorgesehen sind.

9. Installationsdose nach Anspruch 6 und 7, **dadurch gekennzeichnet, dass** der Bund (6) an den Abflachungen (14, 16) zu diesen parallele Sollbruchlinien (16) aufweist.

10. Installationsdose nach Anspruch 6, **gekennzeichnet durch** vom Bund (6) wegragende Ohren (26) zur Aufnahme von Fixierschrauben.

11. Installationsdose nach Anspruch 4 und 10, **dadurch gekennzeichnet, dass** die Bohrung im Bund (6) bzw. den Ohren (26) mit Teilen der Rastschultern (8) fluchten.

12. Installationsdose nach einem der vorstehenden Ansprüche, **dadurch gekennzeichnet, dass** der Bund (6), die Wand (2) und der Boden (4) aus unterschiedlichen Kunststoffmaterialien zusammengespritzt sind.

13. Installationsdose nach Anspruch 4 und 6, **dadurch gekennzeichnet, dass** die Elastizität des Materials der Dosenwand ausreichend zur Anpassung an die Plattendichte von Hohlwänden zwischen Bund (6) und Rastschultern (8) bemessen ist.

14. Installationsdose nach Anspruch 4 und 6, **dadurch gekennzeichnet, dass** die Wand (2) zwischen dem Bund (6) und den Rastschultern (8) zur Anpassung an die Plattendicke von Hohlwänden balgförmig (Faltenbalg 10) ausgebildet ist.

15. Installationsdose nach einem der vorstehenden Ansprüche, **dadurch gekennzeichnet, dass** in der Wand vorbereitete Durchtrittsöffnungen (20, 22) zur Leitungseinführung ausgebildet sind.

16. Installationsdose nach Anspruch 14, **dadurch gekennzeichnet, dass** die vorbereiteten Durchtrittsöffnungen (22) in Form sternförmig verlaufender Schwächungslinien des Wandmaterials ausgebildet sind.
